# EUROPÄISCHE PATENTSCHRIFT

(11) **EP 0 574 650 B1**
(45) Veröffentlichungstag und Bekanntmachung des Hinweises auf die Patenterteilung: **19.03.1997**
(21) Anmeldenummer: 93101253.8
(22) Anmeldetag: 28.01.1993
(51) Int. Cl.: F16F 1/36, F16F 1/12

(54) **Schwingungsdämpfer**
Vibration damper
Amortisseur de vibrations

(30) Priorität: 17.06.1992 DE 4219820
(43) Veröffentlichungstag der Anmeldung: 22.12.1993
(73) Patentinhaber: Firma Carl Freudenberg, D-69469 Weinheim (DE)
(72) Erfinder: Mitsch, Franz, W-6148 Heppenheim (DE); Buchholz, Klaus, W-6940 Weinheim (DE)

(56) Entgegenhaltungen:
- DE-A- 2 036 744
- DE-A- 2 616 726
- FR-A- 2 643 429
- GB-A- 788 484
- US-A- 2 801 841
- US-A- 2 924 447
- US-A- 3 198 508

## Beschreibung

Die Erfindung betrifft einen Schwingungsdämpfer für die Bewegung von zumindest zwei relativ zueinander verschiebbaren Körpern, der ein quer zur Verschiebungsrichtung vorstehendes, im wesentlichen U-förmiges Profil aufweist und im Bereich seiner vorspringenden Schenkel an jeweils einem Körper festgelegt ist, wobei die Schenkel einander umter einem Winkel A durchschneiden und im Bereich der Durchschneidung ein Gelenk bilden und wobei der Schwingungsdämpfer einstückig aus einem gummielastischen Werkstoff erzeugt ist.

Ein solcher Schwingungsdämpfer ist aus der GB-A-788 484 bekannt. Der Dämpfer ist blockförmig ausgebildet und mit einer sich quer zur Verschiebungsrichtung erstreckenden, keilförmigen Ausnehmung versehen. Die durch die Ausnehmung einander benachbarten Oberflächenbereiche sind kurvenförmig gestaltet und als Anschlagflächen ausgebildet. Dabei ist allerdings zu beachten, daß der Block während der bestimmungsgemäßen Verwendung im Bereich des Gelenks Setzungserscheinungen aufweist, die keine gleichbleibenden Gebrauchseigenschaften während einer langen Gebrauchsdauer zulassen. Zur Einstellung der Federkennlinie des Blocks wird vorgeschlagen, eine Einstellklammer in die Aussparung einzusetzen, wobei die einander zugewandten Oberflächenbereiche, die den Einschnitt begrenzen, auf der Klammer abgestützt sind. Die Klammer ist aus zwei starren, relaxationsfreien Platten gebildet die im Nutgrund des Einschnitts formschlüssig von dem elastomeren Werkstoff gehalten sind. Im Bereich der Mündung des Einschnitts ist ein Stellelement angeordnet, das es ermöglicht, die beiden Platten gegen den angrenzenden elastomeren Werkstoff zu verspannen und dadurch die Dämpfungscharakteristik zu beeinflussen. Hierbei ist von Nachteil, daß die Betätigung des Stellelements aufwendig ist und daß der Schwingungsdämpfer in fertigungstechnischer und wirtschaftlicher Hinsicht durch den mehrteiligen Aufbau wenig zufriedenstellend ist.

Ein weiterer Schwingungsdämpfer ist aus der US-A-3,034,777 bekannt. Der vorbekannte Schwingungsdämpfer weist die Form eines im wesentlichen U-förmigen Metallbügels auf, der unter Vorspannung zwischen zwei einander benachbarten Windungen einer Schraubenfeder einspannbar ist. Im Bereich der Auflageflächen der Windungen ist der Federstahl mit einer Beschichtung aus gummielastischem Werkstoff versehen. Dabei ist allerdings zu beachten, daß die Dämpfungseigenschaften des vorbekannten Schwingungsdämpfers nur wenig befriedigend sind.

Aus der US-3,198,508 ist ein Schwingungsdämpfer bekannt, der aus elastomerem Werkstoff besteht und auf einander benachbarte Windungen einer Schraubenfeder aufschnappbar ist. Der Schwingungsdämpfer arritiert den Federweg zwischen den beiden Windungen dadurch, daß er den Hohlraum zwischen den Windungen, im Querschnitt betrachtet, vollständig ausfüllt.

Der Erfindung liegt die Aufgabe zugrunde, einen Schwingungsdämpfer der vorbekannten Art derart weiterzuentwickeln, daß sich eine verbesserte Dämpfung insbesondere bei Schraubenfedern mit geringer Eigendämpfung ergibt und der Schwingungsdämpfer sowohl in fertigungstechnischer als auch in wirtschaftlicher Hinsicht einfach und kostengünstig herstellbar ist.

Diese Aufgabe wird mit den kennzeichnenden Merkmalen von Anspruch 1 gelöst.Auf vorteilhafte Ausgestaltung nehmen die Unteransprüche bezug.

Zur Verbesserung der Dämpfungseigenschaften ist es vorgesehen, daß der gummielastische Werkstoff eine Dämpfung tan δ = 0,1 bis tan δ = 0,8 aufweist, daß der Winkel 45 bis 180° beträgt, daß die Schenkel im Bereich der den Körper zugewandten Enden als Federclip ausgebildet und schnappbar auf die Körper aufsteckbar sind und daß die Schenkel zumindest in den Bereichen der Federclips und des Gelenks eine Armierung aufweisen. δ bezeichnet den Dämpfungswinkel. Der Schwingungsdämpfer kann beispielsweise auf zwei einander benachbarten Windungen einer Schraubenfeder angeordnet werden, wobei die Schwingungsenergie der beiden relativ zueinander verschiebbaren Windungen in dem Dämpfungselement in Wärme umgewandelt wird. Der Schwingungsdämpfer besteht aus einem hochdämpfenden Elastomerwerkstoff. Durch die einstückige Ausbildung ist der Schwingungsdämpfer besonders einfach und kostengünstig herstellbar. Die Schenkel sind im Bereich der den Körpern zugewandten Enden als Federclip ausgebildet und schnappbar auf die Körper aufsteckbar. Die Schwingungsdämpfung wird durch die relative Verlagerung der Körper zu den Federclips weiter begünstigt. Die Montage des Schwingungsdämpfers gestaltet sich besonders einfach und sekundäre Hilfsmittel zur Befestigung des Schwingungsdämpfers an den zu dämpfenden Körpern sind entbehrlich.

Die Schenkel bilden im Bereich der Durchschneidung ein Gelenk, wobei die Schenkel zumindest in den Bereichen der Federclips und des Gelenks eine Armierung aufweisen können. Hierbei ist von Vorteil, daß an den während der Montage höher beanspruchten Teilbereichen der Schenkel, also im Bereich der Federclips, eine Verstärkung vorgesehen sein kann, um Relaxationserscheinungen des hochdämpfenden Elastomerwerkstoffs zu reduzieren. Desweiteren ist im Bereich des Gelenks eine Armierung vorgesehen, um Ermüdungserscheinungen während der bestimmungsgemäßen Verwendung des Schwingungsdämpfers zu vermeiden. Die Armierungen innerhalb des Schwingungsdämpfers können einstückig ineinander übergehend ausgebildet sein.

Im Rahmen der vorliegenden Erfindung ist es vorgesehen, daß das Gelenk in Verschiebungsrichtung im wesentlichen mittig zwischen den Federclips angeordnet ist, wobei die Federclips auf den einander zugewandten Seiten einstückig angeformte Anschlagpuffer aufweisen. Sind die Schwingungsdämpfer beispielsweise am Außenumfang der Schraubenfeder angeclipst, begrenzen die Anschläge die Einfederung derselben und wirken dadurch einer Materialermüdung entgegen.

Durch ein einfaches Aufstecken des Schwingungsdämpfers auf die Körper ist jederzeit ein einfaches Auswechseln der Schwingungsdämpfer möglich. Neben dem Einschnappen des Schwingungsdämpfers an den einander benachbarten Köpern kann der Schwingungsdämpfer beispielsweise auch durch Verkleben oder Vulkanisieren mit den zueinander verschiebbaren Körpern verbunden sein.

Der erfindungsgemäße Schwingungsdämpfer gelangt bevorzugt zur Dämpfung von Schraubenfedern mit geringer Eigendämpfung zur Anwendung um große Schwingungsamplituden an den Federwendeln, die Lärm und Materialermüdung verursachen, zu vermeiden. Je nach Anregung der Eigenschwingungsform treten die Schwingungsmaxima an unterschiedlichen Federwendeln auf, so daß der erfindungsgemäße Schwingungsdämpfer am äußeren oder inneren Federumfang der Schraubenfeder angeordnet sein kann. Die in die Stahlfeder eingeleitete Schwingungsenergie wird in den Dämpfungselementen in Wärme umgewandelt. Die Schenkel umgreifen die Windungen bevorzugt entlang eines bogenförmigen Umfangssegments, das im Bereich seiner Begrenzungen mit dem Mittelpunkt der Schraubenfeder einen Winkel von 10 bis 170°, bevorzugt von 55 bis 120° einschließt. Durch die vergleichsweise große Erstreckung des Schwingungsdämpfers in Umfangsrichtung kann bei vergleichsweise geringen Abmessungen des Schwingungsdämpfers in radialer Richtung eine hervorragende Dämpfung auftretender Schwingungen erreicht werden. Die erfindungsgemäßen Schwingungsdämpfer sind einfach zu handhaben und können dadurch problemlos den jeweiligen Gegebenheiten des Anwendungsfalles angepaßt werden.

Im nachfolgenden wird der erfindungsgemäße Schwingungsdämpfer anhand der in der Anlage beigefügten Zeichnungen weiter verdeutlicht.

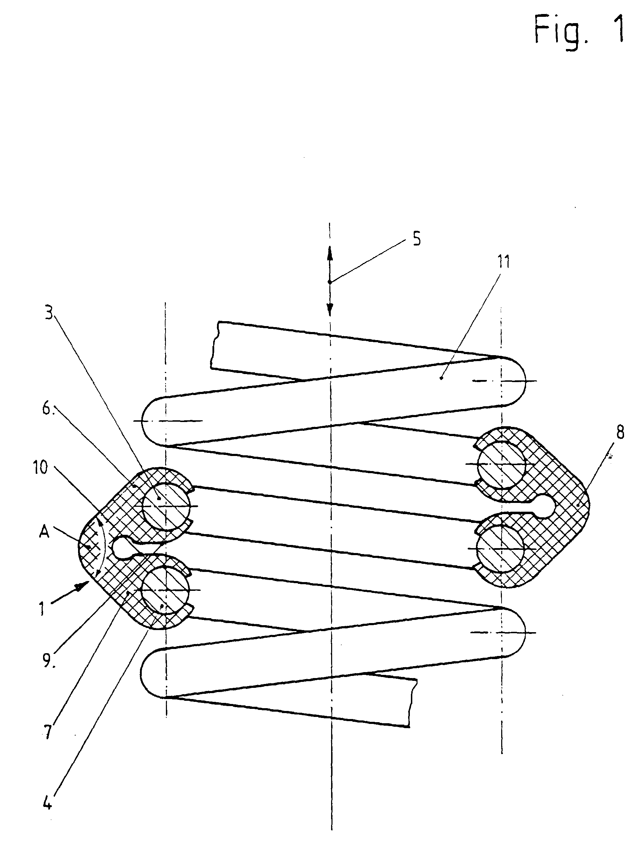

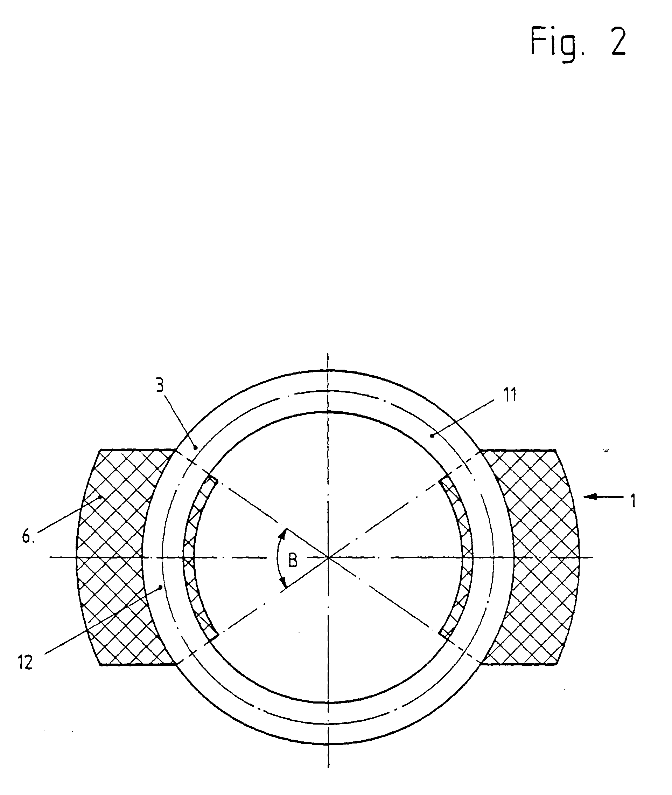

In Figur 1 ist ein Ausführungsbeispiel gezeigt, bei dem zwei Schwingungsdämpfer auf einander gegenüberliegenden Seiten einer Schraubenfeder angeordnet sind. In Figur 2 ist die Anordnung aus Figur 1 in einer Draufsicht gezeigt.

In den Figuren 1 und 2 sind zwei Schwingungsdämpfer gezeigt, die übereinstimmend ausgebildet sind und auf dem Außenumfang einer Schraubenfeder 11 befestigt sind. Die in Verschiebungsrichtung 5 relativ zueinander verschiebbaren Windungen sind kreisförmig gestaltet und werden von den Schenkeln 6, 7 des im wesentlichen U-förmigen Schwingungsdämpfers unter radialer Vorspannung umfangseitig umgriffen. Die Enden der Schenkel 6, 7, sind als Federclip ausgebildet und können auf die Windungen aufgesteckt werden. Eine einfache Montage und Demontage ist dadurch gewährleistet. Die Anschläge 9, 10, die einstückig mit den Schenkeln 6, 7 ausgebildet sind und auf den einander zugewandten Seiten angeordnet sind, begrenzen die Einfederung der Schraubenfeder 11 in Verschiebungsrichtung 5. Dadurch können sowohl Lärm als auch Materialermüdung der Schraubenfeder 11 wirkungsvoll verhindert werden.

Die Schwingungsmaxima können in Abhängigkeit von der Schwingungsanregung an unterschiedlichen Federwendeln auftreten, so daß die einfache Montage der Schwingungsdämpfer von hervorzuhebender Bedeutung ist. Im hier gezeigten Beispiel schließen die Schenkel 6, 7 einen Winkel A von 90° ein und erstrecken sich über ca. 60° (Winkel B) des Umfangs der Schraubenfeder. die Ausgestaltung des Schwingungsdämpfer weist in diesem Ausführungsbeispiel einen besonders guten Kompromiß aus hervorragenden Dämpfungseigenschaften, einfacher Montierbarkeit sowie wirtschaftlich günstige Herstellbarkeit und geringen Außenabmessungen auf.

## Patentansprüche

1. Schwingungsdämpfer (1) für die Bewegung von zumindest zwei relativ zueinander verschiebbaren Körpern (3, 4), der ein quer zur Verschiebungsrichtung (5) vorstehendes, im wesentlichen U-förmiges Profil aufweist und im Bereich seiner vorspringenden Schenkel (6, 7) an jeweils einem Körper (3, 4) festgelegt ist, wobei die Schenkel (6, 7) einander unter einem Winkel (A) durchschneiden und im Bereich der Durchschneidung ein Gelenk (8) bilden und wobei der Schwingungsdämpfer (1) einstückig aus einem gummielastischen Werkstoff erzeugt ist, dadurch gekennzeichnet, daß der gummielastische Werkstoff eine Dämpfung von tan δ = 0,1 bis tan δ = 0,8 aufweist, daß der Winkel (A) 45 bis 180° beträgt, daß die Schenkel (6, 7) im Bereich der den Körpern zugewandten Enden als Federclip ausgebildet und schnappbar auf die Körper (3, 4) aufsteckbar sind und daß die Schenkel (6, 7) zumindest in den Bereichen der Federclips und des Gelenks (8) eine Armierung aufweisen.

2. Schwingungsdämpfer nach Anspruch 1, dadurch gekennzeichnet, daß der Winkel (A) 75 bis 105° beträgt.

3. Schwingungsdämpfer nach einem der Ansprüche 1 bis 2, dadurch gekennzeichnet, daß das Gelenk (8) in Verschiebungsrichtung (5) im wesentlichen mittig zwischen den Federclips angeordnet ist und daß die Federclips auf den einander zugewandten Seiten einstückig angeformte Anschlagpuffer (9, 10) aufweisen.

4. Schwingungsdämpfer nach einem der Ansprüche 1 bis 3, dadurch gekennzeichnet, daß die Schenkel (6, 7) auf einstückig ineinander übergehenden Windungen einer Schraubenfeder (11) aufsteckbar sind, daß die Schenkel (6, 7) die Windungen entlang eines bogenförmigen Umfangssegments (12) umgreifen und daß die Umfangsbegrenzungen des Segments (12) mit dem Mittelpunkt der Schraubenfeder (11) einen Winkel (B) von 10 bis 170° einschließen.

5. Schwingungsdämpfer nach Anspruch 4, dadurch gekennzeichnet, daß der Winkel (B) 45 bis 120° beträgt.

## Claims

1. A vibration damper (1) for the movement of at least two bodies (3, 4) which can be displaced relative to one another, the said vibration damper having an essentially U-shaped profile which projects transversely to the direction of displacement (5) and being fixed to each body (3, 4) in the region of its projecting limbs (6, 7), the limbs (6, 7) intersecting one another at an angle (A) and forming a hinge (8) in the region of the intersection, and the vibration damper (1) being produced in one piece from a rubber-elastic material, characterized in that the rubber-elastic material exhibits damping of tan δ = 0.1 to tan δ = 0.8, in that the angle (A) is 45 to 180°, in that the limbs (6, 7) are designed as spring clips in the region of the ends adjacent to the bodies and can be attached snappably onto the bodies (3, 4), and in that the limbs (6, 7) have a reinforcement at least in the regions of the spring clips and of the hinge (8).

2. A vibration damper according to claim 1, characterized in that the angle (A) is 75 to 105°.

3. A vibration damper according to either of claims 1 and 2, characterized in that the hinge (8) is arranged essentially centrally between the spring clips in the direction of displacement (5) and in that the spring clips have integrally formed stop buffers (9, 10) on the mutually facing sides.

4. A vibration damper according to any one of claims 1 to 3, characterized in that the limbs (6, 7) can be mounted on turns of a helical spring (11) which merge integrally into one another, in that the limbs (6, 7) grip the turns over an arcuate segment (12) of the circumference and in that the peripheral boundaries of the segment (12) enclose an angle (B) of 10 to 170° with the centre of the helical spring (11).

5. A vibration damper according to claim 4, characterized in that the angle (B) is 45 to 120°.

## Revendications

1. Amortisseur de vibrations (1) pour le mouvement d'au moins deux corps (3, 4) pouvant subir un déplacement relatif l'un par rapport à l'autre, qui comprend un profil ayant essentiellement une forme en U et saillant perpendiculairement à la direction de déplacement (5) et est fixé sur un corps respectif (3, 4) dans la zone de ses branches saillantes (6, 7), les branches (6, 7) se coupant en formant un angle (A) et formant une articulation (8) dans la zone où elles se croisent, et l'amortisseur de vibrations (1) étant fabriqué d'une seule pièce dans une matière de gomme élastique, caractérisé en ce que la matière de gomme élastique présente un amortissement compris entre tan δ = 0,1 et tan δ = 0,8, en ce que l'angle (A) mesure de 45 à 180°, en ce que les branches (6, 7) sont exécutées en tant que clips élastiques dans la zone des extrémités situées du côté des corps et peuvent être fixées sur les corps (3, 4) par encliquetage et en ce que les branches (6, 7) sont pourvues d'une armature au moins dans les zones des clips élastiques et de l'articulation (8).

2. Amortisseur de vibrations selon la revendication 1, caractérisé en ce que l'angle (A) mesure de 75 à 105°.

3. Amortisseur de vibrations selon l'une des revendications 1 à 2, caractérisé en ce que l'articulation (8) est située sensiblement de manière centrale entre les clips élastiques dans la direction de déplacement (5) et en ce que les clips élastiques sont pourvus, sur les côtés tournés l'un vers l'autre, de tampons de butée (9, 10) solidaires avec eux.

4. Amortisseur de vibrations selon l'une des revendications 1 à 3, caractérisé en ce que les branches (6, 7) peuvent être fixées sur les spires se confondant d'un ressort à boudin (11), en ce que les branches (6, 7) entourent les spires le long d'un segment circonférentiel (12) courbé et en ce que les limites circonférentielles du segment (12) forment avec le centre du ressort à boudin (11) un angle (A) mesurant de 10 à 170°.

5. Amortisseur de vibrations selon la revendication 4, caractérisé en ce que l'angle (B) mesure de 45 à 120°.
